# DEMANDE DE BREVET EUROPEEN

(11) **EP 3 098 761 A1**
(43) Date de publication de la demande: **30.11.2016**
(21) Numéro de dépôt: 15305783.1
(22) Date de dépôt: 25.05.2015
(51) Int. Cl.: G06K 19/077, H01Q 1/22, H01Q 7/00

(54) **CIRCUIT D'ANTENNE RADIOFRÉQUENCE À MUTUELLES INDUCTANCES IMBRIQUÉES**

(71) Demandeur: GEMALTO SA, 92190 Meudon (FR)
(72) Inventeur: Buyukkalender, Arek, 13881 Gemenos Cedex (FR); Mendez, Lucile, 13881 Gemenos Cedex (FR); Meridiano, Jean-Luc, 13881 Gemenos Cedex (FR)
(74) Mandataire: Milharo, Emilien

(57) **Abrégé**

L'invention concerne un circuit d'antenne radiofréquence (4A, 14A, 24A)) comportant au moins une portion électriquement conductrice notamment sous forme de piste ou de fil (30, 31, 32), formant une première spirale (S1) avec des premières spires et deux portions terminales (A, B) ; Il est caractérisé en ce qu'il comprend une seconde spirale (S2) s'étendant sensiblement à partir d'une des portions terminales (A, B), le long et entre des spires de ladite première spirale (S1).

L'invention concerne également un dispositif radiofréquence comportant le circuit d'antenne.

## Description

L'invention concerne le domaine des transpondeurs radiofréquences à antenne et la structure de ces transpondeurs radiofréquences.

Plus particulièrement, l'invention peut concerner des supports à puce sans-contact, tels que des cartes à puce sans contact, passeport dont la communication est amplifiée par une antenne passive (ou antenne relais).

L'invention peut également viser des systèmes de documents de voyage électroniques sans contact, tels que passeports électroniques et visas électroniques sous forme de transpondeurs disposés ensemble. En particulier, ces documents et visas sont conformes aux spécifications de l'ICAO (acronyme de l'expression anglo-saxonne "International Civil Aviation Organization") et norme ISO/IEC 14443.

L'invention peut concerner des transpondeurs radiofréquences dans différentes gammes de fréquence notamment UHF. Les transpondeurs radiofréquences peuvent comprendre des antennes à spirale et/ou associée / couplée à des antennes type dipôle.

Le document US 6 378 774 illustré aux figures 1 et 2, décrit une carte à puce comprenant un module de circuit intégré (2) à interfaces de communication à contacts et à antenne. Le corps de carte comprend une antenne passive qui comprend deux bobines (3,4) montées en parallèle sur une capacité, une bobine large fermée pouvant être disposée sensiblement en périphérie du corps de carte et une bobine étroite disposée centrée avec l'antenne du module. La bobine large a pour fonction de communiquer vis-à-vis d'un lecteur externe et la boucle étroite a pour fonction de se coupler électromagnétiquement et de communiquer avec le module.

Ces supports ont l'inconvénient, du fait du recours à une antenne principale passive à deux boucles en forme d'un huit, de présenter une construction complexe.

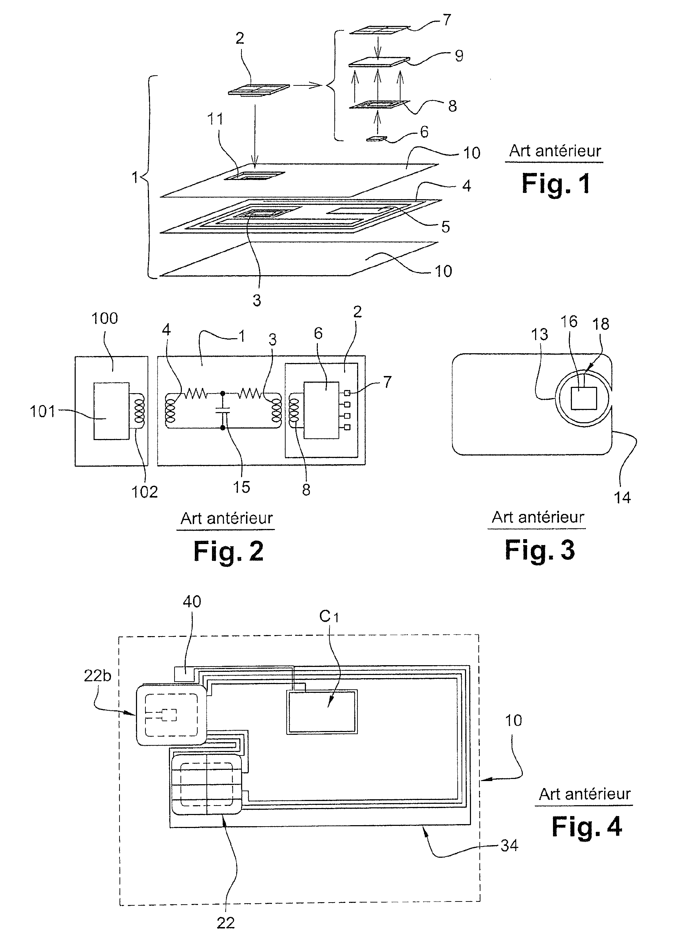

Le document US5955723 illustré à la figure 3, décrit un support de données comprenant un circuit intégré 16 relié à une première boucle de conducteur 18, au moins une seconde boucle conductrice 14 de surface de couplage correspondant approximativement à celle du support et une troisième boucle 13 appartenant à la seconde boucle et ayant approximativement les dimensions de la première boucle. Les première et troisième boucles sont disposées sensiblement concentriquement et sont couplées ensemble. Dans un mode de réalisation illustré à la figure 3, la troisième boucle est ouverte vers l'extérieur ; Elle correspond à une portion rentrante en creux ou concave de la première boucle venant de l'extérieur vers l'intérieur de la surface de couplage délimitée par la surface interne de l'antenne 14.

Le support obtenu a l'inconvénient de nécessiter une antenne passive dont la boucle principale s'étend sur toute périphérie du support. En outre les constructions décrites ne permettent pas d'atteindre un niveau visé de performance conforme au standard ISO/IEC 14443 ; ICAO et/ou EMV.

On connait également un mode de réalisation de la société SPS (Smart packaging Solutions) qui utilise un module à contact et à antenne disposé dans une cavité de corps de carte à puce bancaire. Ce module est couplé avec une antenne passive disposée sur presque toute la surface du corps de carte ; Il comprend des boucles sensiblement concentriques disposées en spirale autour de la cavité du module ; La première boucle adjacente à la cavité étant très large de plusieurs millimètres sous l'emplacement de la cavité de module voire 5 mm et les suivantes également pour permettre un embossage sur les spires sans risque de sectionner les spires à l'embossage. En outre, l'antenne est connectée à des plaques de condensateur métalliques disposées de part et d'autre du support d'antenne. La dernière spire s'étend en périphérie de la carte pour embrasser le plus de flux radiofréquence d'un lecteur.

Cette construction a l'inconvénient de présenter des risques de délamination dans la mesure où les feuilles plastiques constituant le corps de carte adhérent mal aux surfaces métalliques des spires de l'antenne et/ou des plaques de condensateur.

On connait également la demande de brevet EP 2 710 523 A1 visant à résoudre les inconvénients ci-dessus et proposant une antenne sur une demi-surface de carte à puce au format ISO 7816 (format carte bancaire) et un couplage entre l'antenne passive et un module de carte à puce à antenne sur une portion de l'antenne passive en forme de U. Le dispositif sur cette figure a l'inconvénient d'utiliser une antenne gravée sur les deux faces d'un substrat et d'utiliser une surface non négligeable du substrat consacrée à des plaques de condensateur.

On connait également la demande de brevet EP 1924959 A1 proposant un transpondeur radiofréquence comportant une puce radiofréquence reliée à une antenne filaire sur une seule face de substrat, dans lequel la capacité est obtenue par une variation de l'espacement inter spires sur au moins une portion de l'antenne de manière à former une capacité de type inter-spires.

La variation de l'écartement entre les spires peut requérir une surface disponible du support réservée à l'antenne, qui est trop importante, du moins à certains endroits.

L'invention vise à résoudre les inconvénients précités.

En particulier, elle vise une construction de l'antenne passive ou normale de transpondeur radiofréquence plus simple à réaliser industriellement tout en conservant des propriétés radiofréquences performantes.

L'invention vise également à mettre en oeuvre moins de surface métallique pour l'antenne passive et/ou le condensateur associé notamment pour économie de surface conductrice gravée.

A cet effet, l'invention a pour objet un circuit d'antenne radiofréquence comportant, au moins une portion électriquement conductrice notamment sous forme de piste ou de fil, formant une première spirale avec des premières spires et deux portions terminales; Le circuit se distingue en ce qu'il comprend une seconde spirale s'étendant à partir d'une des portions terminales, le long et entre des spires de ladite première spirale.

Grâce à ces dispositions, on peut former une capacité (ou condensateur), associée à un circuit d'antenne de transpondeur ou circuit d'antenne passive, entre les pistes ou spires du circuit d'antenne même et de préférence sur une même face de substrat isolant. En outre, la surface requise pour atteindre des performances de communication standard notamment ISO/IEC 14443 et EMV est minimisée de manière optimale.

Selon d'autres caractéristiques ou mode de réalisation :
- La première spirale (S1) présente une première inductance normale (ou positive - par exemple 2 µH) et la seconde spirale présente une seconde inductance plus importante ; Elle peut être au moins dix fois plus importante en valeur absolue (par exemple égale à -38 µH ;
- Le circuit d'antenne radiofréquence comprend au moins deux portions de spirale S1 et S2 imbriquées l'une dans l'autre,
- Le circuit d'antenne radiofréquence comprend des spirales imbriquées formant des inductances mutuelles ou réciproques ;
- La seconde spirale (S2) équivaut à ou confère une valeur C de capacité / condensateur (par exemple une spirale S2 de (-38 µH) confère sensiblement l'équivalent d'une capacité de 33 pF);
- La première spirale (S1) à inductance est formée par des spires enroulées sensiblement dans un plan dans un premier sens (E), en présentant un espace inter-spires, et la seconde spirale (S2) comprend une spire disposée à l'intérieur de cet espace inter-spires, enroulée dans un second sens contraire au premier sens ;
- Alternativement, la première spirale (S1) est formée par des spires enroulées sensiblement dans un plan dans un premier sens (E), en présentant un espace inter-spires et la seconde spirale (S2) comprend une spire à l'intérieur de cet espace inter-spires, enroulée dans un second sens (E) identique au premier sens ;
- Le circuit comprend au moins un saut entre les première et seconde spirales à partir d'une portion terminale de la première spirale ou d'au moins une première spire de l'intérieur vers l'extérieur (ou la sortie) de la première spirale (S1) ou inversement (vers l'intérieur de la spirale S1);
- Le saut s'effectue sur au moins une à dix spires de la première spirale (S1) à inductance normale ;
- Le circuit comprend un saut de la spire interne jusqu'à la dernière ou avant dernière spire externe de la première spirale (S1) à inductance normale ;
- Le circuit présente une capacité équivalente égale à 33 pF (ou inductance de la seconde spirale de (- 33 µH) avec un total d'environ 3,5 spires de spirale à seconde (grande) inductance et 4 spires de spirale à inductance normale sur une surface sensiblement égale à une demie-surface de carte à puce au format ISO 7816. L'inductance normale est égale à 2 µH.

L'invention a aussi pour objet un dispositif radiofréquence comprenant une puce radiofréquence et le circuit d'antenne radiofréquence ci-dessus.

Selon d'autres caractéristiques :
- Le dispositif comprend un circuit d'antenne passive et au moins un transpondeur à puce radiofréquence couplé électromagnétiquement avec ledit circuit d'antenne passive et est caractérisé en ce que ledit circuit d'antenne passive comprend le circuit d'antenne radiofréquence ci-dessus ;
- La surface de couplage de l'antenne passive (A) s'étend de préférence sur une surface qui est environ égale à 81 x 25 mm ou moins de la moitié de la surface d'une carte à puce au format ISO 7816.

D'autres particularités et avantages de l'invention apparaîtront à la lecture de la description faite à titre d'exemple non limitatif et en regard des dessins annexés sur lesquels :
- Les figures 1 et 2 illustrent une carte à puce à interface duale selon l'art antérieur ;
- La figure 3 illustre une carte à puce sans contact de l'art antérieur;
- La figure 4 illustre une carte à puce sans contact de l'art antérieur résolvant des problèmes de l'art antérieur des figures 1 à 3;
- La figure 5 illustre une vue schématique d'un circuit d'antenne conforme à un premier mode de réalisation du circuit de l'invention;
- Les figures 5A et 5B illustrent un banc de mesure d'inductance de la première spirale et seconde spirale ;
- La figure 5C illustre un circuit équivalent à l'antenne de la figure 5, 5A, 5C dans lequel la spirale S2 est remplacée par une capacité dont la valeur est testée par tâtonnement pour obtenir le même effet que celui combiné de S1 et S2 ensemble des figures 5, 5A, 5C;
- La figure 6 illustre un premier mode de réalisation d'un dispositif radiofréquence à antenne passive utilisant le circuit d'antenne de la figure précédente;
- La figure 7 illustre un second mode de réalisation d'un dispositif radiofréquence à antenne passive utilisant le circuit d'antenne de la figure 5 ;
- La figure 8 illustre un premier mode de réalisation d'un dispositif transpondeur radiofréquence simple utilisant un circuit d'antenne selon l'invention.
- La figure 9 illustre un troisième mode de réalisation d'un dispositif radiofréquence à antenne passive utilisant deux types de spirale, la spirale S2 comportant plusieurs sauts vers l'intérieur de la première spirale S1.

Les figures 1-4 de l'art antérieur ont été décrites précédemment en introduction.

Les antennes passives sont respectivement référencées (3, 4) et (13, 14). Elles comprennent respectivement une petite boucle (3, 13) et une grande boucle (4, 14).

A la figure 3, le flux électromagnétique induit à l'intérieur de la boucle 14 est contraire à celui induit dans la boucle 13 et peut nuire à l'efficacité du couplage électromagnétique.

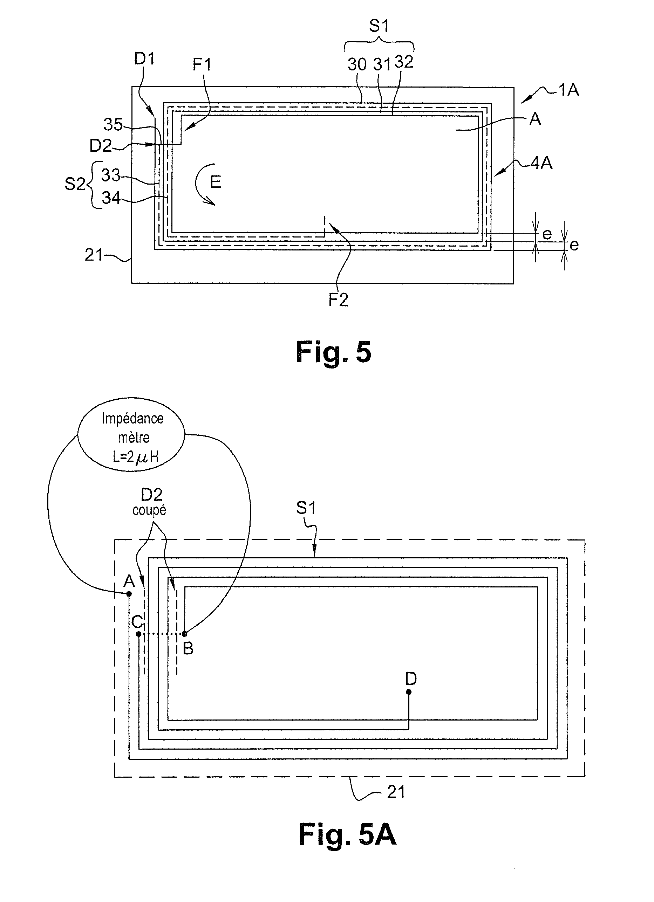

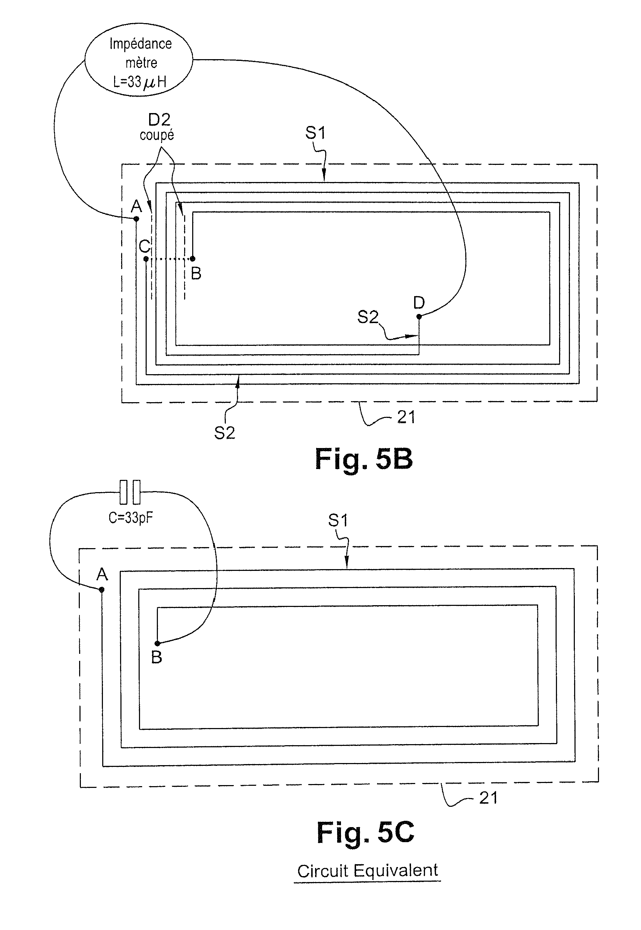

A la figure 5, est représenté schématiquement un dispositif radiofréquence 1A comportant un circuit d'antenne radiofréquence 4A conforme à un premier mode de réalisation de l'invention.

Selon l'invention, le circuit d'antenne comporte au moins une portion électriquement conductrice notamment sous forme de piste, fil, enroulement, spire, bobine formant une première spirale à inductance normale.

La première spirale (S1) comporte des premières spires et deux portions terminales.

Dans l'exemple, la spirale S1 (en trait plein) comporte des spires 30, 31, 33 et est réalisée en fil conducteur électrique avec gainage isolant (émail) incrusté par technique à ultrasons. L'espacement inter-spires est d'environ de 600 µm.

Cette spirale S1 présente ici une valeur inductance normale (ou positive) d'une valeur égale à environ 2 µH, mesurée entre les points A et B grâce à un pont d'impédance avec une fréquence à 13.56 MHz et avec une tension de 100 mV, en ayant préalablement coupé la liaison 35 (saut de spires) entre la spirale S1 et S2.

D'autres techniques de réalisation d'antenne peuvent convenir comme la broderie de fil conducteur, la gravure, l'impression de matière conductrice. Le cas échéant un pont isolant peut être requis pour croiser des spires comme indiqué ultérieurement.

Selon une caractéristique d'un premier mode préféré de construction, le circuit comprend une seconde spirale (S2) s'étendant à partir d'une des portions terminales B, C (ou du pont 35), le long et entre des spires de ladite première spirale S1. Cette définition est illustrée par différents modes de réalisation décrits par la suite.

Le circuit d'antenne radiofréquence selon l'invention comprend au moins deux portions de spirale S1 et S2 imbriquées l'une dans l'autre.

L'invention forme un circuit d'antenne radiofréquence à mutuelles inductances imbriquées.

Le circuit d'antenne radiofréquence comprend des spirales imbriquées formant des inductances mutuelles ou réciproques ;

On verra par la suite dans différents modes décrits que le circuit d'antenne de l'invention peut être tel que le parcours d'antenne normal refait des tours S2 dans un même sens de spirale vers l'intérieur alors que le parcours de spirale s'est achevé au à l'intérieur dans la spirale S1.

Le parcours de spirale S2 peut aussi être agencé de manière à refaire un ou des tours dans le sens orienté pour sortir (ou tendant à sortir) de la spirale S1 (vers l'extérieur alors que le point de parcours se situe proche de l'extérieur de S1 ou s'oriente vers la sortie de S1).

Ce premier mode de construction préféré peut être indépendant des différentes constructions ou différents agencements de la première spirale par rapport à une seconde spirale, donnés uniquement comme exemple. Ce premier mode de construction peut être également indépendant du caractère de la seconde (grande) inductance de la seconde spirale.

Selon une caractéristique d'un troisième mode préféré de l'invention, le circuit d'antenne 4A comporte au moins une portion électriquement conductrice sous forme notamment de piste ou fil, enroulement, spire, bobine agencée de manière à constituer une seconde spirale S2 à seconde (grande ou négative) inductance. La seconde spirale comprend les spires en pointillés 33 et 34 et s'étend le long de la spirale S1 à partir d'un saut 35 de spires.

La spirale à seconde (grande ou négative) inductance est mesurée à l'aide d'un pont d'impédance à une fréquence de 13.56 MHz et à une tension de 100 mV, tel que le montre la figure 5A, en ayant préalablement coupé la liaison 35 entre la spirale S1 et S2.

Une valeur de -33 µH (micro Henry) est alors mesurée entre les points C et D de la spirale S2.

Dès lors, grâce à cette spirale S2 à seconde (forte ou négative)inductance, le circuit total 4A (SI + S2) présente une fréquence de résonance de 15.2 MHz sur l'antenne.

Pour déterminer la capacité équivalente crée avec la seconde antenne S2, on soude alors une capacité physique sur la spirale S1 entre les points A et B de manière à obtenir la même fréquence de résonance de 15.2 MHz obtenue avec le circuit complet 4A. Ici, il a fallu souder une capacité d'une valeur de 33 pF (pico Farad).

Ainsi selon une caractéristique du circuit d'antenne radiofréquence 4A, la seconde spirale à seconde (grande ou négative) inductance S2 confère une valeur de capacité / condensateur très importante inattendue. Ce condensateur équivalent de 33 pF constitué par la spirale S2 (ou seconde / forte inductance de S2), permet d'accorder en fréquence le circuit d'antenne passive S1 de manière surprenante avec le minimum de surface occupée sur le substrat 21.

Il en résulte d'après les essais qu'une seconde (grande et/ou négative) inductance de -38 µH produit un effet équivalent, au moins en terme de fréquence de résonance, à celui d'une capacité égale à environ 33 pF branchée aux bornes terminales A, B de l'antenne (ou spirale) S1.

Selon une caractéristique du mode préféré, la première spirale à inductance S1 du circuit d'antenne 4A, est formée par des spires enroulées sensiblement dans un plan dans un premier sens, en présentant un espace inter-spires (e), et la seconde spirale à seconde (grande et/ou négative) inductance S2 est disposée à l'intérieur de cet espace inter-spires (e), enroulée dans un second sens identique au premier sens.

Dans l'exemple, le circuit est formé ou déposé sur une même face d'un substrat 21 en plastique, PET, PVC, Polycarbonate, plastique de marque « Teslin », papier, etc. Le fil d'antenne est au moins partiellement enfoui sous le niveau de surface du substrat.

La spirale S1 est enroulé dans le sens (E) contraire aux aiguille d'une montre, à partir d'un point de départ « D1 » situé à l'extérieur du circuit d'antenne 4A ou spirales 4A jusqu'à un point interne « F1 » à la spirale S1.

L'espacement inter-spires (e)des spires 30, 31, 32 est ici de 600 µm.

Ensuite, le circuit d'antenne 4A s'étend du point F1 vers l'extérieur des spirales 4A en croisant deux spires 30, 31 de la spirale S1.

Ensuite, le parcours se poursuit par une seconde spirale S2 en pointillés avec des spires d'antenne qui s'étend dans cet espace inter-spire (e) de la première antenne S1. Le parcours s'effectue dans le même sens (E), contraire aux aiguilles d'une montre, que la spirale S1.

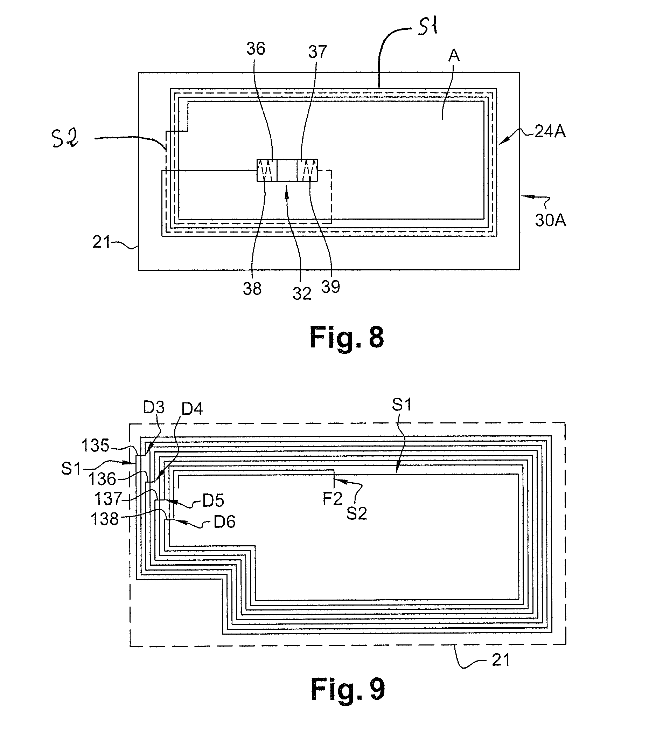

Alternativement, selon un second mode de réalisation, la seconde spirale S2 à seconde (grande et/ou négative) inductance est disposée à l'intérieur de cet espace inter-spires (e), mais enroulée dans un second sens contraire au premier sens (E) d'une première spirale S1. (À voir toutefois une variante préférée en figure 9 de ce second mode de réalisation)

Bien que possible, ce second mode est un peu moins préféré car il peut être moins performant, en terme de communication radiofréquence, vraisemblablement du fait d'un flux électromagnétique généré par la spirale seconde ou secondaire S2 inversé par rapport au flux généré par la première ou principale spirale S1.

Selon une caractéristique du mode préféré, le circuit d'antenne radiofréquence comprend un saut 35 d'au moins une spire de l'intérieur 32 vers l'extérieur de la première spirale S1 puis la formation de la seconde spirale S2 parallèlement à la première spirale S1 et en direction de l'intérieur de la première spirale S1.

Dans l'exemple, le saut de spires est effectué par une portion 35 entre les deux spirales S1, S2. Cette portion croise de l'intérieur vers l'extérieur de l'antenne 4A, des spires 30, 31 pour se positionner entre les deux dernières spires périphérique de l'antenne 4A. Alternativement, le saut peut aller plus loin au-delà de la dernière spire périphérique 33.

Le saut peut aller de la spire interne 32 jusqu'à la dernière ou avant dernière spire externe de la première spirale à inductance normale.

La spire 34 se reboucle vers l'intérieur de l'antenne 4A jusqu'à un point final F2 à partir d'un point de départ D2 après le pont 35. Ici la spire 34, stoppe son parcours à un niveau situé entre deux spires de la spirale S1.

Cependant, cette spire pourrait poursuivre jusqu'au pont 35 et même au-delà en formant au moins une spire interne ou plusieurs.

Cela permet d'augmenter la capacité équivalente crée si celle-ci n'est pas suffisante.

Selon une caractéristique, le saut peut s'effectuer vers l'extérieur sur au moins une à dix spires de la première spirale à inductance normale.

Dans l'exemple, pour atteindre les valeurs de capacité et d'inductance indiqués par la suite, le saut est de quatre spires et demie.

Selon une caractéristique de ce mode préféré, le circuit d'antenne radiofréquence présente une capacité équivalente égale à 33 pF avec un total de 3,5 spires de spirale à seconde (grande et/ou négative) inductance et 4 spires de spirale à inductance normale sur une surface sensiblement égale à une demi-surface d'un corps 121 de carte à puce au format ISO 7816.

Le fil de cuivre a un diamètre d'environ : 112 µm

Les dimensions externes de l'antenne radiofréquence sont de 81 x 25 mm. Ces dimensions peuvent être inférieures, voire supérieures dans la limite de la Class 1 définie par la norme ISO 14443-1.

A la figure 9, un troisième mode de réalisation d'agencement de spirale prévoit de former la seconde spirale S2 de partir de la portion terminale externe de la première spirale S1 au niveau du point de départ D3 (comme la position A de S1 à la figure 5A);

On effectue un saut (ou pont) 135 vers l'intérieur de la première spirale S1 en sautant une spire, puis la première spire externe de S2 s'étend entre les spires de S1 de manière à tourner dans la spirale S1 vers l'extérieur de la spirale S1 jusqu'au pont 135 ou avant de retrouver le pont 135.

Ensuite, juste avant d'atteindre le premier saut ou pont 135, la spirale S2 effectue un autre saut 136 à partir du point de second départ ou inflexion D4 vers l'intérieur de la spirale S1, comme précédemment en sautant une autre spire de la spirale S1 ; Ensuite, la spirale S2 tourne en direction de l'extérieur (ou sortie) de la spirale comme précédemment jusqu'à atteindre le pont 136 ou avant le pont 136.

On procède de manière identique que précédemment pour les sauts 137 et 138 à partir respectivement des points de nouveau départ D5, D6 jusqu'au point final F2 situé à l'intérieur de la spirale S1.

Ce mode de réalisation possède l'avantage non négligeable de permettre la suppression d'un double saut de fil sur le parcours de la seconde spirale S2.

Alternativement, chaque saut d'une spire vers l'intérieur de la spirale S1 peut être remplacé par un saut de deux ou n spires de S1.

Le dispositif 1A, 10A, 20A (fig. 5 à 7) est ici dans l'exemple un insert (ou inlay) de carte à puce sans-contact et/ou à contact conforme au standard ISO 7816 et ISO/IEC 14443. Il peut constituer un sous-ensemble de passeport électronique ou autre objet sans-contact comme une étiquette électronique, un badge, un ticket de transport, etc.

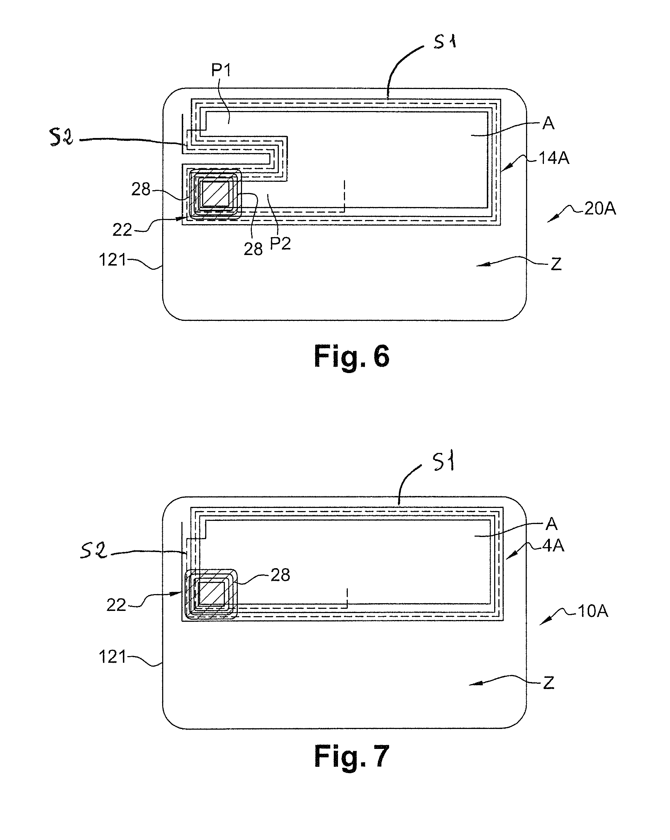

Le circuit d'antenne 4A est ici une antenne passive accordée ou destinée à être accordée en fréquence avec au moins un transpondeur radiofréquence 22 ou 22b (fig. 7); Le transpondeur 22 comprend une puce de circuit intégré radiofréquence reliée à une interface à antenne 28 (ici schématisée). Le transpondeur peut être dans l'exemple un module à interface duale 22 (antenne et plages de contact en surface du corps de carte) ou un module sans-contact de carte à puce 22b (fig. 7B).

D'une manière générale, dans le cadre de la présente description, on entend par transpondeur, tout circuit électronique radiofréquence communicant à l'aide d'un champ électromagnétique et comportant une bobine connectée à un condensateur et/ou à un circuit intégré.

Les transpondeurs sont utilisés dans différents domaines économiques tels que le bancaire (porte-monnaie électronique), la communication, le transport, l'identité (e-passeport, ID-carte). Dans l'identité notamment, il est connu d'effectuer l'identification d'une personne par communication radiofréquence avec un objet électronique portable sans contact de type RFID.

Le module 22 peut comprendre ou non un substrat isolant supportant des plages de contact et/ou de l'antenne.

L'antenne passive 4A comprend une boucle principale unique formée de plusieurs spires ; Elle comprend au moins une portion de surface (A) à l'intérieur de la boucle pour effectuer un couplage électromagnétique avec au moins un circuit transpondeur.

De préférence, pour de meilleurs résultats de couplage et de performances satisfaisant notamment les tests du standard ISO/IEC 14443 et EMVCo plusieurs spires de l'antenne passive 24 s'étendent ou sont destinées à s'étendre sensiblement à proximité et le long de l'interface 28 des modules 22 sur au moins la moitié de leur périphérie (P).

A la figure 6, le dispositif 20A est sensiblement identique ou similaire au dispositif de la figure 7 (les mêmes numéros de référence représentant les mêmes éléments ou similaire).

Le circuit d'antenne diffère de celui des figures 5 ou 7 en ce qu'il comprend deux renfoncements ou protubérances P1, P2 permettant un couplage électromagnétique avec deux modules à antenne ou dans deux positions au choix.

Dans les modes de réalisations, les antennes 4A peuvent être situées en dehors et au dessus des zones d'embossage normalisés des cartes à puce de type bancaire.

Toute la surface inférieure Z de la carte, qui correspond sensiblement à une demi-surface inférieure de la carte, est disponible notamment pour places d'autres composants tels qu'un clavier, une fenêtre d'affichage type Dynamique CVV, un capteur d'empreinte, un interrupteur, etc.

A la figure 8, l'invention prévoit un dispositif radiofréquence comprenant une puce radiofréquence et le circuit d'antenne radiofréquence 24A sensiblement conforme à l'invention et à un des modes décrit précédemment.

Ce circuit d'antenne 24A diffère toutefois en ce qu'il est prévu pour connecter directement une puce radiofréquence ou un module 32 la comportant comme dans l'exemple. L'antenne 24A est directement une antenne de transpondeur 30A.

Le module 32 comporte deux plages d'interconnexion électriquement conductrice 36, 37 pour connecter des portions terminales 38, 39 de l'antenne 24A. Ces portions terminales sont ici en forme de zigzags.

Les dispositifs 1A, 10A, 20A, 30A peuvent comprendre un ou plusieurs feuilles ou film de recouvrement, décoration, compensation d'épaisseur sur l'une ou les deux faces du substrat 21 de manière à constituer un produit fini ou intermédiaire pouvant servir d'insert ultérieur. Les films ou feuilles peuvent être de tout matériau connu.

Concernant, les figures 6 et 7, la feuille de recouvrement peut comprendre une cavité de réception du module à antenne.

Ainsi, l'invention peut créer une seconde (grande et/ou négative) inductance qui est considérée comme capacité C (ou équivalente) notamment sous un mode opératoire de communication ou d'exploitation à fréquence fixe

Les études ou essais ont montré que -38 µH est approximativement équivalent ou égal à 33 pF.

Grâce à l'invention, il est possible de multiplier ou augmenter considérablement la seconde (grande et/ou négative) inductance et d'obtenir une grande capacité d'entrée sans requérir beaucoup de tours de bobinage ou de spires.

Il a été considéré que la longueur des ponts (35, 135-138) est négligeable comparativement à la longueur de la seconde spirale S2 ou considéré comme une portion tampon entre les spirale S1 et S2. Le cas échéant, on peut considérer les ponts comme intégrés à la seconde spirale S2.

La surface occupée de l'antenne 24A sur le substrat 21 est identique ou plus importante que dans l'art antérieur.

Dans les exemples ci-dessus, la seconde inductance de la spirale S2 peut avoir une valeur très forte (comparativement à celle de S1), (au moins en valeur absolue) supérieure à plus de 5 fois ou 10 fois, voire de préférence plus 15 fois ou 20 fois la valeur de l'inductance de la spirale S1.

Dans des constatations à priori, on observe que la spirale S2 des figures 5 ou 8 a tendance à générer un courant dans S2 circulant à contre-sens de celui parcourant S1.

On observe que la spirale S2 de la figure 9 a tendance à être parcourue par un courant circulant dans le même sens que celui parcourant S1, mais avec un retard dans chaque spire de S2 par rapport au courant circulant dans les spires adjacentes à chaque spire de S1.

On observe que la seconde spirale S2 peut s'imbriquer dans la spirale S1 de différentes manières. De préférence, chaque spire de la seconde spirale S2 s'imbrique (ou est introduite) entre deux spires consécutives de la première spirale S1. Ainsi on observe une alternance de spires appartenant à deux spirales distinctes dans le circuit d'antenne.

L'invention se différentie des constructions d'antenne générant de la capacité parasite inter-spire car ce type de capacité parasite est en général négligeable par rapport à la valeur d'une capacité générée par l'invention dans S2.

## Revendications

1. Circuit d'antenne radiofréquence (4A, 14A, 24A)) comportant au moins une portion électriquement conductrice notamment sous forme de piste ou de fil (30, 31, 32), formant une première spirale (S1) avec des premières spires et deux portions terminales (A, B),
**caractérisé en ce qu'**il comprend une seconde spirale (S2) s'étendant sensiblement à partir d'une des portions terminales (A, B), le long et entre des spires de ladite première spirale (SI).

2. Circuit d'antenne radiofréquence selon la revendication précédente, **caractérisée en ce que** la première spirale (S1) présente une première inductance normale positive et la seconde spirale (S2) présente une seconde inductance au moins dix fois plus importante en valeur absolue.

3. Circuit d'antenne radiofréquence selon la revendication précédente, **caractérisé en ce que** la seconde spirale (S2) équivaut à ou confère une valeur C de capacité / condensateur.

4. Circuit d'antenne radiofréquence selon l'une des revendications 1 ou 2, **caractérisé en ce que** la première spirale (S1) à inductance positive est formée par des spires enroulées (30, 31, 32) sensiblement dans un plan dans un premier sens (E), en présentant un espace inter-spires (e), et la seconde spirale (S2) comprend une spire disposée à l'intérieur de cet espace inter-spires (e), enroulée dans un second sens contraire au premier sens.

5. Circuit d'antenne radiofréquence selon l'une des revendications 1 ou 2, **caractérisé en ce que** la première spirale (S1) est formée par des spires enroulées sensiblement dans un plan dans un premier sens (E), en présentant un espace inter-spires (e) et la seconde spirale (S2) comprend une spire à l'intérieur de cet espace inter-spires, enroulée dans un second sens (E) identique au premier sens.

6. Circuit d'antenne radiofréquence selon l'une des revendications 3 ou 4, **caractérisé en ce qu'**il comprend au moins un saut (35) entre les première et seconde spirales à partir d'une portion terminale de la première spirale ou d'au moins une première spire (30, 31) de l'intérieur vers l'extérieur de la première spirale (S1) ou inversement.

7. Circuit d'antenne radiofréquence selon la revendication précédente, **caractérisé en ce que** ledit saut (35) s'effectue sur au moins une (30, 31) à dix spires de la première spirale (S1) à inductance normale.

8. Circuit d'antenne radiofréquence selon l'une quelconque des revendications 4 à 6, **caractérisé en ce qu'**il comprend un saut de la spire interne jusqu'à la dernière ou avant dernière spire externe de la première spirale (S1) à inductance normale.

9. Circuit d'antenne radiofréquence selon l'une quelconque des revendications 4 à 7, **caractérisé en ce qu'**il présente une capacité équivalente égale à 33 pF avec un total de 3,5 spires de spirale à seconde inductance et 4 spires de spirale à première inductance normale égale à 2 µH sur une surface sensiblement égale à une demie-surface de carte à puce au format ISO 7816.

10. Dispositif radiofréquence (1A, 10A, 20A, 30A) comprenant une puce radiofréquence et le circuit d'antenne radiofréquence (4A, 14A, 24A) selon l'une des revendications précédentes.

11. Dispositif radiofréquence (1A, 10A, 20A) selon la revendication précédente comprenant un circuit d'antenne passive (24) et au moins un transpondeur (22) à puce radiofréquence couplé électromagnétiquement avec ledit circuit d'antenne passive (4A, 14A),
**caractérisé en ce que** ledit circuit d'antenne passive (4A, 14A) comprend le circuit d'antenne radiofréquence (4A, 14A) selon l'une des revendications 1 à 8.

12. Dispositif selon la revendication précédente, **caractérisé en ce que** la surface de couplage de l'antenne passive (A) ou antenne de transpondeur (24A) s'étend de préférence sur une surface qui est environ égale à 81 x 25 mm ou moins de la moitié de la surface d'un corps (121) de carte à puce au format ISO 7816.
